# FASCICULE DE BREVET EUROPEEN

(11) **EP 3 897 503 B1**
(45) Date de publication et mention de la délivrance du brevet: **20.09.2023**
(21) Numéro de dépôt: 19813000.7
(22) Date de dépôt: 03.12.2019
(51) Int. Cl.: A61G 7/08

(54) **SYSTEME DE PROPULSION ELECTRIQUE AMOVIBLE POUR UN OBJET ROULANT, NOTAMMENT UN LIT**
ABNEHMBARES ELEKTRISCHES ANTRIEBSSYSTEM FÜR EIN ROLLENDES OBJEKT, INSBESONDERE EIN BETT
REMOVABLE ELECTRIC PROPULSION SYSTEM FOR A ROLLING OBJECT, IN PARTICULAR A BED

(30) Priorité: 18.12.2018 FR 1873165
(43) Date de publication de la demande: 27.10.2021
(73) Titulaire: IFP Energies nouvelles, 92852 Rueil-Malmaison (FR)
(72) Inventeur: VENTURI, Stéphane, 92852 RUEIL-MALMAISON CEDEX (FR); LECOINTE, Bertrand, 92852 RUEIL-MALMAISON CEDEX (FR); DEBAIN, Sandrine, 92852 RUEIL-MALMAISON CEDEX (FR); SANZ, Elena, 92852 RUEIL-MALMAISON CEDEX (FR)
(74) Mandataire: IFP Energies nouvelles
(86) Numéro de dépôt international: PCT/EP2019/083427
(87) Numéro de publication internationale: WO 2020/126458

(56) Documents cités:
- WO-A1-03/034970
- WO-A1-2012/171079

## Description

### Domaine technique

L'invention concerne le domaine de transport des objets roulants, en particulier des lits roulants, par exemple des lits d'hôpitaux.

Le déplacement des charges lourdes roulantes par un utilisateur peut entraîner des difficultés pour l'utilisateur, en particulier si cette action est répétée, telles que des troubles musculo-squelettiques.

### Technique antérieure

Afin de rendre le déplacement des charges lourdes roulantes plus facile et plus ergonomique, il a été envisagé d'équiper ces charges lourdes de machines électriques. Par exemple, une première idée à consister à équiper chaque lit d'hôpital d'un système d'entraînement électrique des roues. Une telle solution est onéreuse, car elle nécessite le remplacement ou la modification de l'ensemble des lits, ce que les hôpitaux ne peuvent pas se permettre. De plus, le système d'entraînement et sa batterie augmentent le poids du lit. Par conséquent, lorsque la batterie est déchargée, les efforts à fournir pour déplacer le lit sont plus importants.

De la même façon, dans le domaine de la logistique ou du commerce, il a été envisagé de rendre électrique tous les chariots. Là aussi, une telle solution est onéreuse.

Une alternative est de prévoir un système amovible de propulsion des objets roulants. Plusieurs solutions techniques ont été envisagées.

Par exemple, la demande de brevet WO 01/85086 décrit un système de propulsion motorisée pour un lit. Le système de propulsion est configuré pour s'atteler à un ou plusieurs points du lit. De par les moyens d'attelage prévus pour ce système de propulsion, ce système ne peut pas être universel et adapté à différents objets roulants. En effet, il ne peut pas être attelé à un objet roulant non muni d'une pièce d'attelage. De plus, pour ce système de propulsion, toutes les roues de l'objet roulant restent en contact avec le sol. Par conséquent, l'orientation de l'attelage (système de propulsion et lit) est plus compliquée, les forces de frottement sont élevées, et la roue motorisée nécessite plus de puissance.

La demande de brevet WO 2012/171079 décrit un deuxième système de propulsion d'un lit d'hôpital. Le système de propulsion est configuré pour lever deux roues du lit. Toutefois, le mécanisme de préhension des roues est complexe et encombrant : la dimension latérale (direction parallèle à l'axe des roues motorisées) est importante (supérieure à la largeur des roues du lit) et peut dépasser les dimensions latérales du lit, ce qui peut être gênant pour le déplacement du lit, en particulier dans un espace réduit tel qu'un couloir ou un ascenseur d'hôpital.

La demande de brevet WO 2013/156030 décrit un troisième système de propulsion d'un lit d'hôpital. Le système de propulsion est configuré pour lever deux roues du lit. Toutefois, le système présente des dimensions latérale (direction parallèle à l'axe des roues motorisées) et longitudinale (direction perpendiculaire à l'axe des roues) qui sont importantes : la plateforme arrière dépasse le lit et la distance entre les roues non motorisées peuvent dépasser les dimensions du lit, ce qui peut être gênant pour le déplacement du lit, en particulier dans un espace réduit, tel qu'un couloir ou un ascenseur d'hôpital.

### Résumé de l'invention

Pour pallier ces inconvénients, la présente invention concerne un système de propulsion électrique pour un objet roulant, comprenant un châssis avec au moins une roue motorisée, et au moins une roue non motorisée, un guidon, et des moyens d'attelage. Les moyens d'attelage sont prévus pour réaliser la préhension, l'orientation et le levage d'au moins une roue de la charge roulante. Les moyens d'orientation de la roue de l'objet roulant orientent la roue selon une direction perpendiculaire à la direction longitudinale du châssis. Ainsi, le déplacement d'objet roulant lourd est rendu facile et ergonomique. De plus, les dimensions des moyens d'attelage sont réduites, en particulier les dimensions latérales, et le système de propulsion est plus compact, ce qui permet de déplacer l'objet roulant, y compris dans un espace réduit. En outre, ces moyens d'attelage sont universels et sont adaptés à de nombreux types d'objets roulants, car l'objet roulant ne nécessite pas de moyens d'attelage spécifique.

L'invention concerne un système de propulsion électrique amovible pour un objet roulant, ledit système de propulsion comprenant un châssis muni d'au moins une roue entraînée par une machine électrique, et d'au moins une roue non entraînée, un guidon et des moyens d'attelage dudit système de propulsion audit objet roulant, lesdits moyens d'attelage comprenant des moyens de préhension et de levage d'au moins une roue dudit objet roulant. Lesdits moyens d'attelage comprennent des moyens d'orientation d'au moins une roue dudit objet roulant dans une direction sensiblement perpendiculaire à la direction longitudinale dudit châssis dudit système de propulsion.

Selon un mode de réalisation, lorsque ledit système de propulsion est attelé à un objet roulant, lesdites roues non entraînées sont disposées sous ledit objet roulant.

Conformément à une mise en oeuvre, lorsque ledit système de propulsion est attelé à un objet roulant, ladite roue entraînée par ladite machine électrique est disposée à l'extérieur dudit objet roulant.

Selon un aspect, lorsque ledit système de propulsion est attelé à un objet roulant, ladite roue entraînée par ladite machine électrique est disposée sous l'objet roulant.

Avantageusement, ledit châssis comporte une plateforme, notamment pour le support d'un utilisateur.

De préférence, lorsque ledit système de propulsion est attelé à un objet roulant, ladite plateforme est disposée sous ledit objet roulant.

Selon à une caractéristique, ledit guidon est articulé par rapport au châssis autour d'un axe horizontal.

Alternativement, ledit guidon est articulé par rapport à un axe d'orientation de ladite roue entraînée autour d'un axe horizontal, ledit axe d'orientation étant en rotation par rapport au châssis autour d'un axe vertical.

Selon une mise en oeuvre, lesdites roues non entraînées sont des roues orientables autour d'un axe vertical, de préférence des roues décentrées orientables.

De manière avantageuse, lesdites roues non entraînées comprennent un moyen de blocage directionnel.

Conformément à un mode de réalisation, ledit système de propulsion comprend trois ou quatre roues.

Avantageusement, ledit objet roulant est un lit roulant, un chariot, un meuble roulant, un fauteuil roulant.

Selon un aspect, ledit guidon comprend des moyens de contrôle de ladite machine électrique et/ou desdits moyens d'attelage.

Selon un mode de réalisation, ladite roue entraînée par ladite machine électrique est disposée à une extrémité dudit châssis opposée à l'extrémité dudit châssis sur laquelle sont disposées ladite roues non entraînée.

En outre, l'invention concerne un attelage comprenant un objet roulant et un système de propulsion électrique selon l'une des caractéristiques précédentes, ledit objet roulant étant attelé audit système de propulsion électrique par lesdits moyens d'attelage.

D'autres caractéristiques et avantages du système selon l'invention, apparaîtront à la lecture de la description ci-après d'exemples non limitatifs de réalisations, en se référant aux figures annexées et décrites ci-après.

### Liste des figures

[Fig 1]

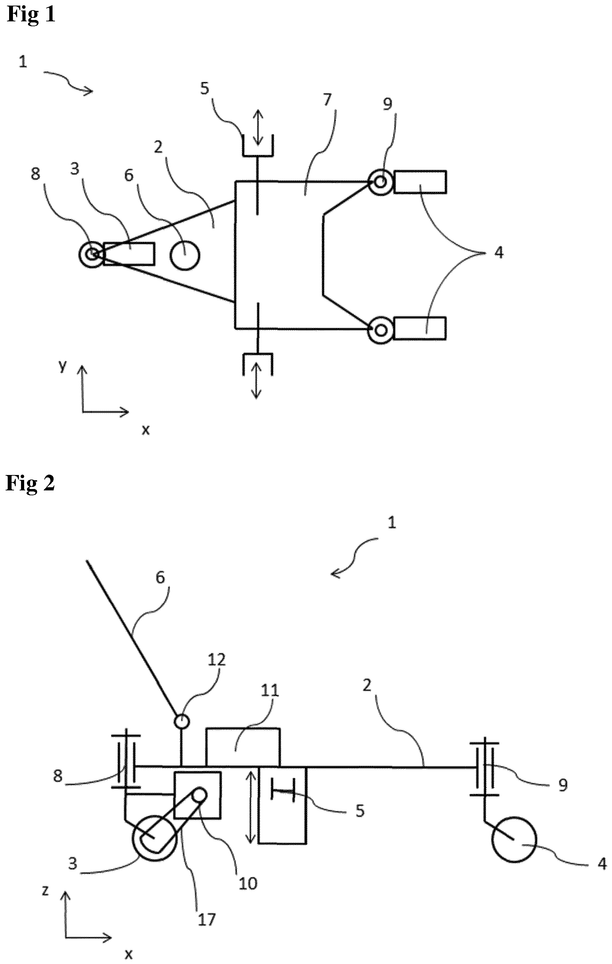

   La figure 1 est une vue de dessus d'un système de propulsion selon un mode de réalisation de l'invention.
[Fig 2]
   La figure 2 est une vue de côté d'un système de propulsion selon une première variante de réalisation de l'invention.
[Fig 3]

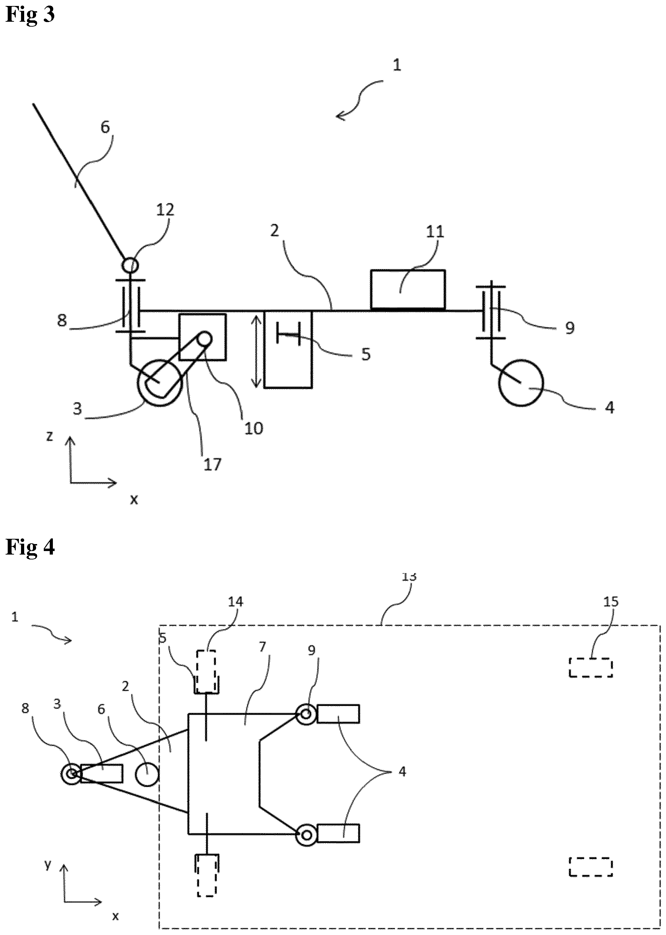

   La figure 3 est une vue de côté d'un système de propulsion selon une deuxième variante de réalisation de l'invention.
[Fig 4]
   La figure 4 est une vue de dessus d'un système de propulsion selon un mode de réalisation attelé à un objet roulant.
[Fig 5]

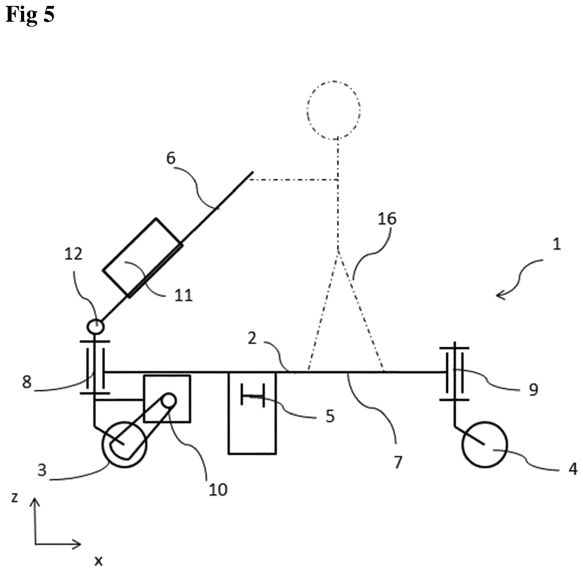

   La figure 5 est une vue de côté d'un système de propulsion selon un mode de réalisation de l'invention pour le déplacement d'un utilisateur.

### Description des modes de réalisation

La présente invention concerne un système de propulsion électrique pour un objet roulant. On appelle système de propulsion électrique un système amovible permettant d'assister le déplacement de l'objet roulant, afin de limiter les efforts requis pour le déplacement de l'objet roulant. Ce système de propulsion électrique comporte au moins une machine électrique pour son entraînement. Un objet roulant est un objet qui comporte au moins deux roues afin de le déplacer.

L'objet roulant peut être de toute forme, notamment un lit roulant, tel que notamment ceux utilisés dans les hôpitaux, un fauteuil roulant, un chariot, tel qu'utilisé pour la logistique, par exemple la logistique hospitalière ou la logistique commerciale (selon un exemple un chariot de supermarché), tout meuble roulant. Un tel objet roulant comporte au moins deux roues, de préférence trois ou quatre. Avantageusement, au moins une roue, de préférence, deux roues de l'objet roulant sont des roues folles, en d'autres termes ce sont des roues décentrées orientables autour d'un axe vertical. L'objet roulant est de préférence non motorisé.

Le système de propulsion électrique selon l'invention comporte :
- Un châssis muni d'au moins une roue motorisée, c'est-à-dire une roue entraînée par une machine électrique, et au moins une roue non motorisée, de préférence deux, c'est-à-dire non entraînée(s) par une machine électrique,
- Un guidon, permettant la manipulation, le déplacement et l'orientation du système de propulsion par un utilisateur,
- Des moyens d'attelage du système de propulsion à un objet roulant, les moyens d'attelage comportent des moyens de préhension et de levage d'au moins une roue, de préférence plusieurs roues, et de manière préférée deux roues, de l'objet roulant, de préférence deux roues de l'objet roulant, en d'autres termes, les moyens d'attelage sont configurés pour agripper (saisir) et lever au moins une roue de l'objet roulant.

L'attelage est donc réalisé par au moins une roue de l'objet roulant, de préférence par au moins une roue folle de l'objet roulant. L'objet roulant ne nécessite donc pas d'être adapté pour le système de propulsion électrique, ce qui rend le système de propulsion électrique universel à différents objets roulants.

Les moyens de préhension de la roue de l'objet roulant permettent la saisie de la roue. Par exemple, ces moyens de préhension peuvent comprendre un système de pince, un système de coincement, des moyens magnétiques, des moyens adhésifs ou tout système analogue. De manière avantageuse, les moyens de préhension peuvent être déplaçables de manière à s'adapter à toutes dimensions de roues et à tout écartement de roue. Le déplacement des moyens de préhension peut être mis en oeuvre au moyen d'un ou plusieurs vérins, par exemple de vérin électrique, de système vis écrous, de système pignon-crémaillère ou tout moyen analogue.

Les moyens de levage de la roue permettent de surélever la roue de l'objet roulant, de manière à ce que cette roue de l'objet roulant ne touche plus le sol. La masse de l'objet roulant supportée par cette roue est alors reportée sur le système de propulsion électrique. Cela permet notamment d'apporter l'adhérence nécessaire à la motricité de la roue motorisée du système de propulsion électrique. Le levage peut être mis en oeuvre au moyen d'un ou plusieurs vérins, par exemple de vérin électrique, de système vis écrous, de système pignon-crémaillère ou tout moyen analogue.

Selon l'invention, les moyens d'attelage comprennent en outre des moyens d'orientation de la roue agrippée (par les moyens de préhension) dans une direction sensiblement perpendiculaire à la direction longitudinale du châssis du système de propulsion (autrement dit, la roue de l'objet roulant est placée dans une direction parallèle à la direction latérale du châssis). La direction longitudinale du châssis est définie par la direction qui relie la roue motorisée, à la roue non motorisée. La direction longitudinale correspond à la direction principale de déplacement du système de propulsion électrique. On entend par sensiblement perpendiculaire, une direction formant un angle compris entre 80 et 100° par rapport à la direction longitudinale. Ainsi, lors de la propulsion de l'objet roulant, au moins une roue de l'objet roulant est agrippée, levée et orientée dans une direction perpendiculaire à la direction longitudinale du châssis. De cette manière, les moyens d'attelage agissent sur le côté le moins épais des roues de l'objet roulant. Cela concourt à ce que les moyens d'attelage possèdent des dimensions latérales réduites par rapport aux dimensions latérales des systèmes de propulsion de l'art antérieur (par exemple ceux décrits dans les demandes de brevet WO 2012/171079 et WO 2013/156030), ce qui facilite son utilisation dans les espaces réduits, tels que les couloirs et les ascenseurs. Les moyens d'orientation de la roue de l'objet roulant peuvent être mis en oeuvre par le déplacement des moyens de préhension de la roue. Selon une mise en oeuvre de l'invention, le système de propulsion électrique peut réaliser la séquence d'étapes suivantes pour l'attelage : préhension de la roue de l'objet roulant, orientation de la roue de l'objet roulant selon une direction perpendiculaire à la direction longitudinale du châssis et levage de la roue de l'objet roulant.

Selon un mode de réalisation de l'invention, le système de propulsion électrique peut être configuré pour que la ou les roues non motorisées soient situées sous l'objet roulant, lorsque le système de propulsion électrique est attelé à l'objet roulant. Ainsi, une partie du système de propulsion électrique ne dépasse pas de l'objet roulant, ce qui facilite son utilisation dans les espaces réduits.

Conformément à une mise en oeuvre de l'invention, le système de propulsion électrique peut être configuré pour que la roue motorisée soit située à l'extérieur de l'objet roulant, selon la direction longitudinale du châssis, lorsque le système de propulsion électrique est attelé à l'objet roulant. En d'autres termes, la partie du châssis qui supporte la roue motorisée dépasse de l'objet roulant selon la direction longitudinale du châssis, lorsque le système de propulsion électrique est attelé à l'objet roulant.

Alternativement, le système de propulsion électrique peut être configuré pour que la roue motorisée soit située sous l'objet roulant, lorsque le système de propulsion électrique est attelé à l'objet roulant. Ainsi, une partie du système de propulsion électrique ne dépasse pas de l'objet roulant, ce qui facilite son utilisation dans les espaces réduits.

De préférence, le système de propulsion peut être configuré pour que la majeure partie du système de propulsion soit située sous l'objet roulant, lorsque le système de propulsion est attelé à l'objet roulant. Seuls la partie du châssis correspondant à la roue motorisée et le guidon dépassent de l'objet roulant selon la direction longitudinale du châssis.

Selon un mode de réalisation, le système de propulsion peut comprendre trois ou quatre roues. Lorsque le système de propulsion comporte trois roues, une unique roue peut être entraînée par une machine électrique. Lorsque le système de propulsion comporte quatre roues, deux roues peuvent être entraînées par une machine électrique.

Conformément à une mise en oeuvre de l'invention, la roue motorisée peut être disposée à une extrémité longitudinale du châssis, et les roues non motorisées peuvent être disposées à l'autre extrémité longitudinale du châssis.

Le châssis peut être réalisé par un ensemble mécanosoudé.

Selon un mode de réalisation préféré, les moyens d'attelage sont liés au châssis entre la roue motorisée et la ou les roues non motorisées. Ainsi, l'encombrement longitudinal du système de propulsion est limité.

Selon un aspect de l'invention, le châssis peut comporter une plateforme. La plateforme peut servir pour le support de charge, en particulier d'un utilisateur. De préférence, cette plateforme est disposée au-dessus des roues non motorisées. Conformément à une variante de cette réalisation, le système de propulsion électrique configuré pour que la plateforme soit située sous l'objet roulant lorsque le système de propulsion électrique est attelé à l'objet roulant, ce qui permet de réduire les dimensions du système de propulsion électrique. Pour ce mode de réalisation, la plateforme ne peut pas être utilisée comme support de charge lorsque le système de propulsion électrique est attelé à un objet roulant. Par exemple, la plateforme peut servir à un utilisateur pour utiliser le système de propulsion en tant que trottinette électrique, lorsque le système de propulsion électrique n'est pas attelé à un objet roulant, ce qui permet de faciliter les déplacements des utilisateurs, entre le déplacement de deux objets roulants Alternativement, la plateforme peut servir au déplacement de charge, lorsque le système de propulsion n'est pas attelé à un objet roulant.

Selon une réalisation de l'invention, le guidon peut être articulé par rapport au châssis selon un axe horizontal fixé au châssis. Cet axe horizontal peut être de préférence selon la direction latérale du châssis. Ainsi, le guidon peut pivoter autour d'un axe horizontal.

Pour ces deux variantes de réalisation du positionnement du guidon, le guidon n'est solidaire d'aucune roue, et le déplacement du système de propulsion est réalisé de manière similaire au déplacement d'un chariot (par exemple comme pour un chariot de supermarché).

Selon une alternative, la roue motorisée peut être une roue orientable par rapport au châssis selon un axe d'orientation vertical, et le guidon peut être articulé ou fixé à l'axe d'orientation vertical de la roue motorisée. En d'autres termes, la roue motorisée peut pivoter par rapport au châssis autour d'un axe d'orientation vertical, le pivotement autour de cet axe vertical étant contrôlé par le déplacement du guidon. Cette réalisation correspond sensiblement au contrôle du déplacement d'un système de type transpalette.

Afin de faciliter le déplacement du système de propulsion électrique par un utilisateur, le guidon peut comprendre des moyens de contrôle, tels que des moyens de contrôle de la machine électrique et/ou des moyens de contrôle des moyens d'attelage. Les moyens de contrôle de la machine électrique permettent l'allumage, l'arrêt, le réglage de la vitesse et/ou du couple de l'assistance électrique. Les moyens de contrôle des moyens d'attelage permettent le contrôle des moyens de préhension pour la préhension de la roue ou des roues de l'objet roulant, le contrôle des moyens de levage de la roue ou des roues de l'objet roulant, et le contrôle des moyens d'orientation des roues de l'objet roulant. Ces contrôles peuvent consister en des déplacements des éléments constituant les moyens d'attelage.

Selon un mode de réalisation de l'invention, le guidon peut être télescopique, repliable et/ou amovible, de manière à faciliter le rangement du système de propulsion électrique en limitant son encombrement. Cela peut permettre aussi de limiter l'encombrement du système de propulsion attelé à un objet roulant dans un espace réduit tel qu'un ascenseur.

Selon une variante de réalisation, lorsque le système de propulsion est attelé à l'objet roulant, le contrôle du système de propulsion ne se fait pas nécessairement par le guidon, le contrôle peut être réalisé par les moyens de contrôle de l'objet roulant, par exemple une poignée, un guidon ou analogue de l'objet roulant.

Le système de propulsion électrique peut comporter en outre une batterie électrique pour l'alimentation de la machine électrique. La batterie électrique peut être placée sur ou sous le châssis, par exemple à l'extrémité longitudinale du châssis à proximité de la roue motorisée, ou à l'extrémité longitudinale du châssis à proximité des roues non motorisées. Alternativement, la batterie peut être placée sur le guidon. De plus, la batterie peut être amovible afin de faciliter sa recharge ou son remplacement. Alternativement, la batterie peut ne pas être amovible.

Selon une mise en oeuvre de l'invention, les roues non motorisées peuvent être des roues folles, c'est-à-dire des roues décentrées orientables autour d'un axe vertical. En d'autre termes, les roues non motorisées peuvent pivoter par rapport au châssis autour d'un axe d'orientation vertical, et l'axe de rotation de la roue peut être décentrée (non concourant) par rapport à l'axe d'orientation vertical.

Alternativement, les roues non motorisées peuvent être des roues orientables autour d'un axe vertical de manière non décentrées. En d'autres termes, les roues non motorisées peuvent pivoter par rapport au châssis autour d'un axe d'orientation vertical, et l'axe de rotation de la roue est aligné avec cet axe d'orientation vertical (concourant avec l'axe d'orientation vertical).

De préférence, pour le mode de réalisation pour lequel les roues non motorisés sont des roues orientables autour d'un axe vertical (décentrées ou non), le système de propulsion électrique peut comporter des moyens de blocage directionnel qui peuvent bloquer la rotation des roues non motorisées autour de leur axe vertical. Ainsi, la commande des moyens de blocage directionnel peut faciliter le déplacement du système de propulsion électrique. Selon des exemples de réalisation, les moyens de blocage directionnel peuvent être commandés lorsque le système de propulsion électrique est attelé à un objet roulant, et lorsque les roues de l'objet roulant en contact avec le sol sont des roues folles. Lors de l'attelage, les roues non motorisées peuvent être de préférence non bloquées par les moyens de blocage directionnel. Lorsque le système de propulsion électrique n'est pas attelé à l'objet roulant, le moyen de blocage directionnel est préférentiellement actionné.

L'invention concerne en outre un attelage formé d'un objet roulant, tel qu'un lit roulant, avec un système de propulsion selon l'une quelconque des combinaisons de variantes décrites ci-dessus. L'objet roulant est attelé au système de propulsion par les moyens d'attelage. En d'autres termes, au moins une roue de l'objet roulant est saisie, orientée perpendiculairement à la direction longitudinale du châssis, et levée, par les moyens d'attelage du système de propulsion.

La figure 1 illustre, schématiquement et de manière non limitative, un système de propulsion électrique selon un mode de réalisation de l'invention. La figure 1 est une vue de dessus du système de propulsion électrique 1. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2. Le châssis 2 supporte trois roues (alternativement le châssis 2 peut comprendre quatre roues). Le châssis 2 supporte une roue 3 (alternativement le châssis 2 peut supporter deux roues 3), qui est une roue entraînée par une machine électrique (non représentée). La roue 3 est orientable par rapport au châssis 2, autour d'un axe vertical 8. A l'autre extrémité, le châssis 2 supporte deux roues 4, qui sont deux roues non entraînées par une machine électrique. Les roues 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Le déplacement latéral des moyens d'attelage est indiqué par une double flèche. Ce déplacement latéral peut servir à la préhension et à l'orientation des roues de l'objet roulant. Les moyens d'attelage 5 sont placés, dans la direction x, entre la roue motorisée 3 et les roues non motorisées 4. De plus, le système de propulsion électrique 1 comprend un guidon 6, par exemple sous la forme d'une tige équipée d'une poignée (non représentée) articulée par rapport au châssis 2. En outre, le système de propulsion électrique 1 comporte une plateforme 7 de support (par exemple d'un utilisateur). La plateforme 7 est située à l'extrémité du châssis 2 qui supporte les roues non motorisées 4.

La figure 2 illustre, schématiquement et de manière non limitative, un système de propulsion électrique selon une première variante de réalisation de l'invention. La figure 2 est une vue de côté du système de propulsion électrique1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis supporte trois roues. Le châssis 2 supporte une roue 3, qui est une roue entraînée par une machine électrique 10 au moyen d'un entraînement 17, par exemple une courroie ou une chaîne (alternativement la machine électrique 10 peut être reliée directement à la roue 3). La roue 3 est orientable par rapport au châssis 2, autour d'un axe vertical 8. La machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Le déplacement vertical des moyens d'attelage 5 est indiqué par une double flèche. Ce déplacement vertical des moyens d'attelage permet notamment le levage des roues de l'objet roulant. Les moyens d'attelage 5 sont placés, dans la direction x, entre la roue motorisée 3 et les roues non motorisées 4. De plus, le système de propulsion électrique 1 comprend un guidon 6, par exemple sous la forme d'une tige équipée d'une poignée (non représentée) articulée par rapport au châssis 2 au moyen d'une articulation 12 d'axe horizontal, selon la direction latérale du châssis 2 (perpendiculaire au plan de la figure). En outre, le système de propulsion électrique 1 comporte une batterie 11. La batterie 11 est placée sur le châssis 2 à proximité de la machine électrique 10 et de la roue motorisée 3.

La figure 3 illustre, schématiquement et de manière non limitative, un système de propulsion électrique selon une deuxième variante de réalisation de l'invention. La figure 3 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis supporte trois roues. Le châssis 2 supporte une roue 3, qui est une roue entraînée par une machine électrique 10 au moyen d'un entraînement 17, par exemple une courroie ou une chaîne. La roue 3 est orientable par rapport au châssis 2, autour d'un axe vertical 8. La machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Le déplacement vertical des moyens d'attelage 5 est indiqué par une double flèche. Ce déplacement vertical des moyens d'attelage permet notamment le levage des roues de l'objet roulant. Les moyens d'attelage 5 sont placés, dans la direction x, entre la roue motorisée 3 et les roues non motorisées 4. De plus, le système de propulsion 1 comprend un guidon 6, par exemple sous la forme d'une tige équipée d'une poignée (non représentée) articulée par rapport à l'axe d'orientation vertical 8 de la roue motorisée 3 au moyen d'une articulation 12 d'axe horizontal, parallèle à l'axe de rotation de la roue motorisée. En outre, le système de propulsion électrique 1 comporte une batterie 11. La batterie 11 est placée sur le châssis 2 à proximité des roues non motorisées 4.

La figure 4 illustre, schématiquement et de manière non limitative, un système de propulsion électrique selon un mode de réalisation de l'invention attelé à un objet roulant 13. La figure 1 est une vue de dessus du système de propulsion électrique 1 et de l'objet roulant 13. Le mode de réalisation de la figure 4 correspond au mode de réalisation de la figure 1. L'objet roulant 13 peut être de tout type, notamment un lit roulant. L'objet roulant comprend deux roues 14, appelés arbitrairement roues arrière, et deux roues 15, appelés arbitrairement roues avant. Le système de propulsion électrique 1 comprend un châssis 2. L'axe x correspond à l'axe longitudinal du châssis 2 et à la direction principale de déplacement du système de propulsion, et l'axe y correspond à l'axe latéral du châssis 2. Le châssis supporte trois roues. Le châssis 2 supporte une roue 3, qui est une roue entraînée par une machine électrique (non représentée). La roue 3 est orientable par rapport au châssis 2, autour d'un axe vertical 8. A l'autre extrémité, le châssis 2 supporte deux roues 4, qui sont deux roues non entraînées par une machine électrique. Les roues 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues arrière 14 de l'objet roulant. Les moyens d'attelage 5 sont représentés de façon simplifiée en tant que pince. Les roues arrière 14 de l'objet roulant sont placées dans la pince, et son orientés selon l'axe y, c'est-à-dire selon un axe perpendiculaire à l'axe longitudinal (axe x) du châssis 2. De plus, les roues avant 15 de l'objet roulant sont libres et non attelées. Le système de propulsion électrique 1 comprend également un guidon 6, par exemple sous la forme d'une tige équipée d'une poignée (non représentée) articulée par rapport au châssis 2. En outre, le système de propulsion électrique 1 comporte une plateforme 7 de support (par exemple d'un utilisateur). La plateforme 7 est située à l'extrémité du châssis 2 qui supporte les roues non motorisées 4. Pour le mode de réalisation de la figure 4, les moyens d'attelage 5, les roues non motorisées 4, la plateforme 7, et une majeure partie du châssis 2 sont situées en-dessous de l'objet roulant. Seuls la roue motorisée 3 et le guidon 6 peuvent dépasser de l'objet roulant 13 dans la direction longitudinale x du châssis 2.

La figure 5 illustre, schématiquement et de manière non limitative, un système de propulsion électrique selon la première variante de réalisation de l'invention, le système de propulsion électrique 1 étant utilisé en tant que trottinette par un utilisateur 16. La figure 5 est une vue de côté du système de propulsion 1. Le système de propulsion de la figure 5 correspond sensiblement au système de propulsion de la figure 3. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis supporte trois roues. Le châssis 2 supporte une roue 3, qui est une roue entraînée par une machine électrique 10 au moyen d'un entraînement 17, par exemple une courroie ou une chaîne. La roue 3 est orientable par rapport au châssis 2, autour d'un axe vertical 8. a machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Les moyens d'attelage 5 sont placés, dans la direction x, entre la roue motorisée 3 et les roues non motorisées 4. De plus, le système de propulsion électrique 1 comprend un guidon 6, par exemple sous la forme d'une tige équipée d'une poignée (non représentée) articulée par rapport au châssis 2 au moyen d'une articulation 12 d'axe horizontal, parallèle à l'axe de rotation de la roue motorisée En outre, le système de propulsion électrique 1 comporte une batterie 11. La batterie 11 est placée sur le guidon 6. Le châssis 2 comporte dans son extrémité longitudinale à proximité des roues non motorisées 4, une plateforme 7. Pour l'utilisation illustrée du système de propulsion électrique 1 non attelé, le système de propulsion électrique est utilisée en tant que trottinette par l'utilisateur 16 : l'utilisateur est debout sur la plateforme 7 et maintient et/ou actionne le guidon 6.

## Revendications

1. Système de propulsion électrique amovible pour un objet roulant, ledit système de propulsion (1) comprenant un châssis (2) muni d'au moins une roue entrainée (3) par une machine électrique (10), et d'au moins une roue non entraînée (4), un guidon (6) et des moyens d'attelage (5) dudit système de propulsion audit objet roulant, lesdits moyens d'attelage (5) comprenant des moyens de préhension et de levage d'au moins une roue dudit objet roulant, **caractérisé en ce que** lesdits moyens d'attelage (5) comprennent des moyens d'orientation d'au moins une roue dudit objet roulant dans une direction sensiblement perpendiculaire à la direction longitudinale (x) dudit châssis dudit système de propulsion (1).

2. Système de propulsion selon la revendication 1, dans lequel lorsque ledit système de propulsion (1) est attelé à un objet roulant, lesdites roues non entraînées (4) sont disposées sous ledit objet roulant.

3. Système de propulsion selon l'une des revendications précédentes, dans lequel lorsque ledit système de propulsion (1) est attelé à un objet roulant, ladite roue entrainée (3) par ladite machine électrique (10) est disposée à l'extérieur dudit objet roulant.

4. Système selon l'une des revendications 1 ou 2, dans lequel lorsque ledit système de propulsion (1) est attelé à un objet roulant, ladite roue entraînée (3) par ladite machine électrique (10) est disposée sous l'objet roulant.

5. Système de propulsion selon l'une des revendications précédentes, dans lequel ledit châssis (2) comporte une plateforme (7), notamment pour le support d'un utilisateur.

6. Système de propulsion selon la revendication 5, dans lequel lorsque ledit système de propulsion (1) est attelé à un objet roulant, ladite plateforme (7) est disposée sous ledit objet roulant.

7. Système de propulsion selon l'une des revendications précédentes, dans lequel ledit guidon (6) est articulé par rapport au châssis (2) autour d'un axe horizontal (12).

8. Système de propulsion selon l'une des revendications 1 à 6, dans lequel ledit guidon (6) est articulé par rapport à un axe d'orientation (8) de ladite roue entraînée (3) autour d'un axe horizontal (12), ledit axe d'orientation (8) étant en rotation par rapport au châssis (2) autour d'un axe vertical (z).

9. Système de propulsion selon l'une des revendications précédentes, dans lequel lesdites roues non entraînées (4) sont des roues orientables autour d'un axe vertical (9), de préférence des roues décentrées orientables.

10. Système de propulsion selon la revendication 9, dans lequel lesdites roues non entraînées (4) comprennent un moyen de blocage directionnel.

11. Système de propulsion selon l'une des revendications précédentes, dans lequel ledit système de propulsion comprend trois ou quatre roues (3 ; 4).

12. Système de propulsion selon l'une des revendications précédentes, dans lequel ledit objet roulant est un lit roulant, un chariot, un meuble roulant, un fauteuil roulant.

13. Système de propulsion selon l'une des revendications précédentes, dans lequel ledit guidon (6) comprend des moyens de contrôle de ladite machine électrique (10) et/ou desdits moyens d'attelage (5).

14. Système de propulsion selon l'une des revendications précédentes, dans lequel ladite roue entraînée (3) par ladite machine électrique est disposée à une extrémité dudit châssis (2) opposée à l'extrémité dudit châssis (2) sur laquelle sont disposées ladite roue (4) non entraînée.

15. Attelage comprenant un objet roulant (13) et un système de propulsion électrique (1) selon l'une des revendications précédentes, ledit objet roulant (13) étant attelé audit système de propulsion électrique (1) par lesdits moyens d'attelage (5).

## Patentansprüche

1. Abnehmbares elektrisches Antriebssystem für ein rollendes Objekt, wobei das Antriebssystem (1) ein Fahrgestell (2) mit mindestens einem angetriebenen Rad (3), das durch eine elektrische Maschine (10) angetrieben wird, und mindestens einem nicht angetriebenen Rad (4), eine Lenkstange (6) und Mittel (5) zum Ankuppeln des Antriebssystems an das rollende Objekt umfasst, wobei die Kupplungsmittel (5) Mittel zum Greifen und Anhaben mindestens eines Rads des rollenden Objekts umfassen, **dadurch gekennzeichnet, dass** die Kupplungsmittel (5) Mittel zum Ausrichten mindestens eines Rads des rollenden Objekts in einer Richtung umfassen, die im Wesentlichen senkrecht zur Längsrichtung (x) des Fahrgestells des Antriebssystems (1) ist.

2. Antriebssystem nach Anspruch 1, wobei, wenn das Antriebssystem (1) an ein rollendes Objekt angekuppelt ist, die nicht angetriebenen Räder (4) unter dem rollenden Objekt angeordnet sind.

3. Antriebssystem nach einem der vorangehenden Ansprüche, wobei, wenn das Antriebssystem (1) an ein rollendes Objekt angekuppelt ist, das durch die elektrische Maschine (10) angetriebene Rad (3) außerhalb des rollenden Objekts angeordnet ist.

4. System nach einem der Ansprüche 1 oder 2, wobei, wenn das Antriebssystem (1) an ein rollendes Objekt angekuppelt ist, das durch die elektrische Maschine (10) angetriebene Rad (3) unter dem rollenden Objekt angeordnet ist.

5. Antriebssystem nach einem der vorangehenden Ansprüche, wobei das Fahrgestell (2) eine Plattform (7), insbesondere zum Tragen eines Benutzers, aufweist.

6. Antriebssystem nach Anspruch 5, wobei, wenn das Antriebssystem (1) an ein rollendes Objekt angekuppelt ist, die Plattform (7) unter dem rollenden Objekt angeordnet ist.

7. Antriebssystem nach einem der vorangehenden Ansprüche, wobei die Lenkstange (6) in Bezug auf das Fahrgestell (2) um eine horizontale Achse (12) gelenkig gelagert ist.

8. Antriebssystem nach einem der Ansprüche 1 bis 6, wobei die Lenkstange (6) in Bezug auf eine Ausrichtungsachse (8) des angetriebenen Rads (3) um eine horizontale Achse (12) gelenkig gelagert ist, wobei die Ausrichtungsachse (8) in Bezug auf das Fahrgestell (2) um eine vertikale Achse (z) drehbar ist.

9. Antriebssystem nach einem der vorangehenden Ansprüche, wobei es sich bei den nicht angetriebenen Rädern (4) um Räder handelt, die um eine vertikale Achse (9) ausrichtbar sind, vorzugsweise um ausrichtbare dezentrierte Räder.

10. Antriebssystem nach Anspruch 9, wobei die nicht angetriebenen Räder (4) ein Richtungsblockierungsmittel umfassen.

11. Antriebssystem nach einem der vorangehenden Ansprüche, wobei das Antriebssystem drei oder vier Räder (3; 4) umfasst.

12. Antriebssystem nach einem der vorangehenden Ansprüche, wobei es sich bei dem rollenden Objekt um ein Rollbett, einen Wagen, ein Rollmöbel oder einen Rollstuhl handelt.

13. Antriebssystem nach einem der vorangehenden Ansprüche, wobei die Lenkstange (6) Mittel zum Steuern der elektrischen Maschine (10) und/oder der Kupplungsmittel (5) umfasst.

14. Antriebssystem nach einem der vorangehenden Ansprüche, wobei das von der elektrischen Maschine angetriebene Rad (3) an einem Ende des Fahrgestells (2) angeordnet ist, das dem Ende des Fahrgestells (2), an dem die nicht angetriebenen Räder (4) angeordnet sind, gegenüberliegt.

15. Kupplung, umfassend ein rollendes Objekt (13) und ein elektrisches Antriebssystem (1) nach einem der vorangehenden Ansprüche, wobei das rollende Objekt (13) durch die Kupplungsmittel (5) an das elektrische Antriebssystem (1) angekuppelt ist.

## Claims

1. Removable electric propulsion system for a rolling object, said propulsion system (1) comprising a chassis (2) provided with at least one wheel (3) driven by an electric machine (10), and with at least one non-driven wheel (4), a handle (6) and means (5) for hitching said propulsion system to said rolling object, said hitching means (5) comprising means for gripping and lifting at least one wheel of said rolling object, **characterized in that** said hitching means (5) comprise means for steering at least one wheel of said rolling object in a direction substantially perpendicular to the longitudinal direction (x) of said chassis of said propulsion system (1) .

2. Propulsion system according to Claim 1, wherein, when said propulsion system (1) is hitched to a rolling object, said non-driven wheels (4) are disposed under said rolling object.

3. Propulsion system according to either of the preceding claims, wherein, when said propulsion system (1) is hitched to a rolling object, said wheel (3) driven by said electric machine (10) is disposed on the outside of said rolling object.

4. System according to either of Claims 1 and 2, wherein, when said propulsion system (1) is hitched to a rolling object, said wheel (3) driven by said electric machine (10) is disposed under the rolling object.

5. Propulsion system according to one of the preceding claims, wherein said chassis (2) has a platform (7), in particular for supporting a user.

6. Propulsion system according to Claim 5, wherein, hen said propulsion system (1) is hitched to a rolling object, said platform (7) is disposed under said rolling object.

7. Propulsion system according to one of the preceding claims, wherein said handle (6) is articulated with respect to the chassis (2) about a horizontal axis (12).

8. Propulsion system according to one of Claims 1 to 6, wherein said handle (6) is articulated with respect to a steering axle (8) of said driven wheel (3) about a horizontal axis (12), said steering axle (8) being in rotation with respect to the chassis (2) about a vertical axis (z).

9. Propulsion system according to one of the preceding claims, wherein said non-driven wheels (4) are wheels that are able to be steered about a vertical axis (9), preferably steerable off-centre wheels.

10. Propulsion system according to Claim 9, wherein said non-driven wheels (4) comprise a directional blocking means.

11. Propulsion system according to one of the preceding claims, wherein said propulsion system comprises three or four wheels (3; 4).

12. Propulsion system according to one of the preceding claims, wherein said rolling object is a rolling bed, a carriage, a rolling piece of furniture, a wheelchair.

13. Propulsion system according to one of the preceding claims, wherein said handle (6) comprises means for controlling said electric machine (10) and/or said hitching means (5).

14. Propulsion system according to one of the preceding claims, wherein said wheel (3) driven by said electric machine is disposed at an opposite end of said chassis (2) from the end of said chassis (2) on which said non-driven wheels (4) are disposed.

15. Hitch comprising a rolling object (13) and an electric propulsion system (1) according to one of the preceding claims, said rolling object (13) being hitched to said electric propulsion system (1) by said hitching means (5).
